# EUROPEAN PATENT APPLICATION

(11) **EP 4 664 996 A1**
(43) Date of publication of application: **17.12.2025**
(21) Application number: 23921195.6
(22) Date of filing: 10.02.2023
(51) Int. Cl.: H04W 36/32, H04W 16/26, H04W 84/00

(54) **TERMINAL DEVICE, WIRELESS RELAY DEVICE, MOBILE BODY, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP); OI Yusuke, Tokyo 107-8556 (JP)
(74) Representative: Weickmann & Weickmann PartmbB
(86) International application number: PCT/JP2023/004575
(87) International publication number: WO 2024/166366

(57) **Abstract**

A terminal device includes a communication unit which receives broadcast data transmitted from a wireless relay device, and a control unit which acquires location information of the wireless relay device from the broadcast data and performs processing for switching a connection destination of the terminal device based on a comparison result between the location information acquired from the broadcast data and location information of the terminal device.

## Description

### BACKGROUND

### 1. TECHNICAL FIELD

The present invention relates to a terminal device, a wireless relay device, a movable body, a wireless communication system, a wireless communication method, and a program.

### 2. RELATED ART

Patent Documents 1 to 4 describe techniques relates to mobile communication.

### Related Art Documents

### Patent Documents

Patent Document 1: PCT International Publication No. WO2020/026734
Patent Document 2: Japanese Patent No. 5077460
Patent Document 3: Japanese Patent Application Publication No. 2022-136907
Patent Document 4: Japanese Patent No. 7091284

### Problem to be Solved

When a movable body is provided with a function of a wireless relay device, there is a problem that by taking into account that a movable body can be moved, a terminal device needs to be connected to an appropriate connection destination. By solving the above-described problem, the present application may improve stability of communication in the movable body. Then, consequently, traffic safety may further be improved which may contribute to development of a sustainable transport system. General Disclosure

According to a first aspect of the present invention, there is provided a terminal device. The terminal device includes a communication unit which receives broadcast data broadcasted from a wireless relay device. The terminal device includes a control unit which acquires location information of the wireless relay device from the broadcast data and performs processing for switching a connection destination of the terminal device based on a comparison result between the location information acquired from the broadcast data and location information of the terminal device.

In the above-described terminal device, when the terminal device is not connected to the wireless relay device and a degree of coincidence between the location information acquired from the broadcast data and the location information of the terminal device becomes higher than a predetermined value, the control unit may perform processing for switching the connection destination of the terminal device to the wireless relay device.

In any of the above-described terminal devices, when the terminal device is connected to the wireless relay device and the degree of coincidence between the location information acquired from the broadcast data and the location information of the terminal device becomes lower than a predetermined value, the control unit may perform processing for switching the connection destination of the terminal device to a wireless communication device other than the wireless relay device.

In any of the above-described terminal devices, the control unit may acquire a displacement of the wireless relay device from a plurality of pieces of broadcast data received at different timings by the communication unit and cause the processing for switching the connection destination of the terminal device to be performed based on a comparison result between the displacement of the wireless relay device and a displacement of the terminal device.

In any of the above-described terminal devices, when the terminal device is not connected to the wireless relay device and a degree of coincidence between the displacement of the wireless relay device and the displacement of the terminal device becomes higher than a predetermined value, the control unit may perform processing for switching the connection destination of the terminal device to the wireless relay device.

In any of the above-described terminal devices, when the terminal device is connected to the wireless relay device and the degree of coincidence between the displacement of the wireless relay device and the displacement of the terminal device becomes lower than a predetermined value, the control unit may perform processing for switching the connection destination of the terminal device to a wireless communication device other than the wireless relay device.

In any of the above-described terminal devices, the processing for switching the connection destination of the terminal device may include processing to transmit a peripheral base station measurement result.

In any of the above-described terminal devices, the broadcast data may be data broadcasted as reporting information.

According to a second aspect of the present invention, there is provided a program. The program causes a computer to function as any of the above-described terminal devices.

According to a third aspect of the present invention, there is provided a wireless relay device. The wireless relay device relays communication between a terminal device and a wireless base station. The wireless relay device includes a communication unit which broadcasts broadcast data including information representing a current location of the terminal device and receives terminal location information representing the current location of the terminal device. The wireless relay device includes a control unit which performs processing for switching a connection destination of the terminal device based on a comparison result between the current location of the terminal device which is represented by the terminal location information and a current location of the wireless relay device.

In the above-described wireless relay devices, when the terminal device is connected to the wireless relay device and a degree of coincidence between the current location of the terminal device which is represented by the terminal location information and the current location of the wireless relay device becomes lower than a predetermined value, the control unit may perform processing for switching the connection destination of the terminal device to a wireless communication device other than the wireless relay device.

In any of the above-described wireless relay devices, the control unit may acquire a displacement of the terminal device from the terminal location information received at different timings by the communication unit and cause the processing for switching the connection destination of the terminal device to be performed based on a comparison result between the displacement of the terminal device and a displacement of the wireless relay device.

In any of the above-described wireless relay devices, when the terminal device is connected to the wireless relay device and a degree of coincidence between the displacement of the terminal device and the displacement of the wireless relay device becomes lower than a predetermined value, the control unit may perform processing for switching the connection destination of the terminal device to a wireless communication device other than the wireless relay device.

In any of the above-described wireless relay devices, the broadcast data may be data broadcasted as reporting information.

According to a fourth aspect of the present invention, there is provided a movable body. The movable body includes any of the above-described wireless relay devices.

According to a fifth aspect of the present invention, there is provided a program. The program causes a computer to function as any of the above-described wireless relay devices.

According to a sixth aspect of the present invention, there is provided a wireless communication method.

The wireless communication method includes receiving broadcast data transmitted from a wireless relay device.

The wireless communication method includes acquiring location information of the wireless relay device from the broadcast data and performing processing for switching a connection destination of the terminal device based on a comparison result between the location information acquired from the broadcast data and location information of the terminal device.

According to a seventh aspect of the present invention, there is provided a wireless communication method. The wireless communication method is performed in a wireless relay device which relays communication between a terminal device and a wireless base station. The wireless communication method includes broadcasting broadcast data including information representing a current location of the terminal device and receiving terminal location information representing the current location of the terminal device. The wireless communication method includes performing processing for switching a connection destination of the terminal device based on a comparison result between the current location of the terminal device which is represented by the terminal location information and a current location of the wireless relay device.

The summary clause does not necessarily describe all necessary features of the embodiments of the present invention. The present invention may also be a sub-combination of the features described above.

### BRIEF DESCRIPTION OF THE DRAWINGS

Fig. 1 schematically illustrates a configuration of a wireless communication system 5 according to an embodiment.
Fig. 2 illustrates an example of a system configuration of a wireless relay device 110.
Fig. 3 illustrates an example of a system configuration of a terminal device 140.
Fig. 4 illustrates a case where a terminal device 140a exists outside a movable body 100a, and the terminal device 140a is connected to a wireless base station 120a.
Fig. 5 illustrates a case where a user 90 gets in the movable body 100a.
Fig. 6 illustrates a case where the movable body 100 travels in a state in which the user 90 is aboard the movable body 100a.
Fig. 7 illustrates a case where the user 90 gets out of the movable body 100a.
Fig. 8 illustrates an example of a sequence according to a wireless communication method performed in the wireless communication system 5.
Fig. 9 illustrates an example of the sequence according to the wireless communication method performed in the wireless communication system 5.
Fig. 10 illustrates an example of a computer 2000 in which a plurality of embodiments of the present invention may be entirely or partially embodied.

### DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

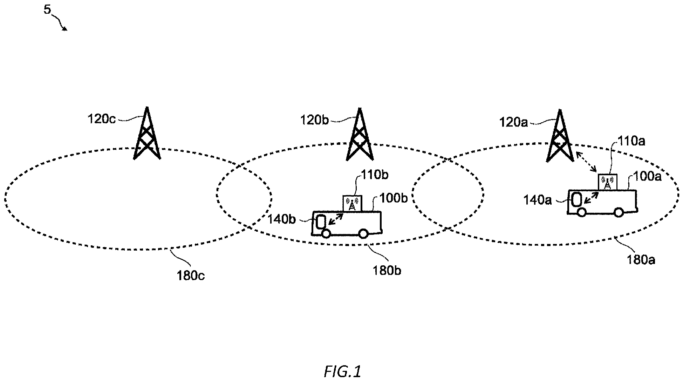

Fig. 1 schematically illustrates a configuration of a wireless communication system 5 according to an embodiment. The wireless communication system 5 includes a wireless base station 120a, a wireless base station 120b, and a wireless base station 120c, a wireless relay device 110a and a wireless relay device 110b, a movable body 100a and a movable body 100b, and a terminal device 140 and a terminal device 140b.

In the present embodiment, the wireless base station 120a, the wireless base station 120b, and the wireless base station 120c may be collectively referred to as a "wireless base station 120" while ends of reference signs are omitted. Similarly, the wireless relay device 110a and the wireless relay device 110b may be collectively referred to as a "wireless relay device 110" while ends of reference signs are omitted. Similarly, the movable body 100a and the movable body 100b may be collectively referred to as a "movable body 100" while ends of reference signs are omitted. Similarly, the terminal device 140a and the terminal device 140b may be collectively referred to as a "terminal device 140" while ends of reference signs are omitted.

The wireless base station 120 is a mobile communication base station supporting one or more mobile communication systems. Similarly, the wireless relay device 110 and the terminal device 140 are wireless communication devices supporting one or more mobile communication systems. According to the present embodiment, the mobile communication system supported by the wireless base station 120, the wireless relay device 110, and the terminal device 140 may be, for example, mobile system communication used in a mobile communication system such as a fourth generation mobile communication system (4G) or a fifth generation mobile communication system (5G).

The wireless base station 120 is a base station fixed in a particular location. Each of the wireless base stations 120 forms a cell and performs wireless communication with the wireless relay device 110 and the terminal device 140 by forming the cell. For example, a cell 180a is a cell formed by the wireless base station 120a, a cell 180b is a cell formed by the wireless base station 120b, and a cell 180c is a cell formed by the wireless base station 120c. In the present embodiment, the cell 180a, the cell 180b, and the cell 180c may be collectively referred to as a "cell 180" while ends of reference signs are omitted.

The wireless relay device 110 has a function to perform service provision as a wireless base station for the terminal device 140 and also has a function to receive service provision as a terminal device for the wireless base station 120. The wireless relay device 110 relays communication between the terminal device 140 and the wireless base station 120. The terminal device 140 can access a core network via the wireless base station 120. The terminal device 140 may be able to access the core network via the wireless relay device 110 and the wireless base station 120 even when the terminal device 140 cannot directly perform wireless communication with the wireless base station 120.

The movable body 100 is movable machinery. The movable body 100 is a vehicle such as an automobile such as a bus or a train, for example. The vehicle is an example of transport machinery. The movable body 100 may be various aircrafts including an unmanned aircraft, an artificial satellite, a vessel, or the like. The movable body 100a includes the wireless relay device 110a. The movable body 100b includes the wireless relay device 110b. Accordingly, the wireless relay device 110a is movable together with the movable body 100a, and the wireless relay device 110b is movable together with the movable body 100b.

Accordingly, when the movable body 100a is located in the cell 180a of the wireless base station 120a, the wireless relay device 110a relays communication between the terminal device 140a possessed by a user aboard the movable body 100a and the wireless base station 120a. When the movable body 100b is located in the cell 180b of the wireless base station 120b, the wireless relay device 110b relays communication between the terminal device 140b possessed by a user aboard the movable body 100b and the wireless base station 120b.

In the wireless communication system 5 of the present embodiment, the wireless relay device 110 transmits reporting information by including therein current location information of the wireless relay device 110. The reporting information in the present embodiment is an example of "broadcast data" broadcasted by the wireless relay device 110. When it is determined that the terminal device 140 exists in the movable body 100 based on a current location of the terminal device 140 and the current location of the wireless relay device 110, the terminal device 140 performs processing for the terminal device 140 to connect to the wireless relay device 110. On the other hand, when it is determined that the terminal device 140 exists outside the movable body 100 based on the current location of the terminal device 140 and the current location of the wireless relay device 110, the terminal device 140 performs the processing for the terminal device 140 to connect to a wireless communication device (such as, for example, the wireless base station 120) other than the wireless relay device 110. The current location information of the wireless relay device 110 may include, for example, information representing a geographical current location of the wireless relay device 110 such as, for example, latitude and longitude information.

For example, in a case where the terminal device 140 is connected to the wireless base station 120, when it is determined the terminal device 140 exists in the movable body 100, the terminal device 140 transmits a measurement result of peripheral base station measurement so that the terminal device 140 is connected to the wireless relay device 110. In a case where the terminal device 140 is connected to the wireless relay device 110, when it is determined that the terminal device 140 exists outside the movable body 100, the terminal device 140 transmits the measurement result of the peripheral base station measurement so that the terminal device 140 is connected to the wireless base station 120. With this configuration, the terminal device 140 can be connected to the wireless relay device 110 when the terminal device 140 exists in the movable body 100 and connected to the nearby wireless base station 120 when the terminal device 140 exists outside the movable body 100.

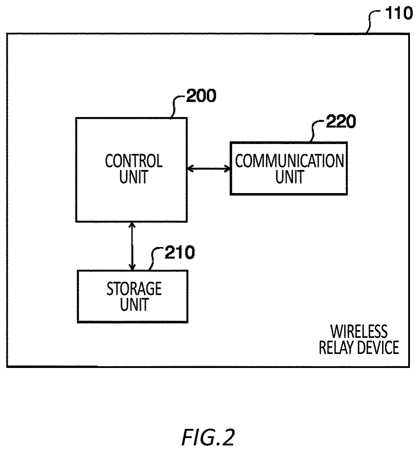

Fig. 2 illustrates an example of a system configuration of the wireless relay device 110. The wireless relay device 110 relays communication between the wireless base station 120 and the terminal device 140. The wireless relay device 110 includes a control unit 200, a storage unit 210, and a communication unit 220.

The control unit 200 performs control of the entire wireless relay device 110. The communication unit 220 is responsible for wireless communication between the wireless base station 120 and the terminal device 140. The control unit 200 is realized by a computing device including a processor. The storage unit 210 is realized including a non-volatile storage medium. The control unit 200 performs processing by using information stored in the storage unit 210. The control unit 200 may be realized by a microcomputer including a CPU, a ROM, a RAM, an I/O, a bus, and the like. The wireless relay device 110 may be realized by a computer. The wireless relay device 110 may be realized by a single computer. The wireless relay device 110 may be realized a plurality of computers. A function of the wireless relay device 110 may be realized by a virtual system that is realized by using a virtualization technique.

The communication unit 220 broadcasts broadcast data including information representing the current location of the terminal device 140 and receives terminal location information representing the current location of the terminal device 140. In the present embodiment, the broadcast data is data broadcasted as the reporting information. The reporting information may be system information in the wireless communication system 5. The system information may be a system information block (SIB). The broadcast data may be data transmitted on a control plane. The control unit 200 performs the processing for switching a connection destination of the terminal device 140 based on a comparison result between the current location of the terminal device 140 which is represented by the terminal location information and the current location of the wireless relay device 110.

When the terminal device 140 is connected to the wireless relay device 110 and a degree of coincidence between the current location of the terminal device 140 which is represented by the terminal location information and the current location of the wireless relay device 110 becomes lower than a predetermined value, the control unit 200 performs the processing for switching the connection destination of the terminal device 140 to a wireless communication device other than the wireless relay device 110.

The control unit 200 may acquire a displacement of the terminal device 140 from the terminal location information received at different timings by the communication unit 220 and cause the processing for switching the connection destination of the terminal device 140 to be performed based on a comparison result between the displacement of the terminal device 140 and a displacement of the wireless relay device 110.

When the terminal device 140 is connected to the wireless relay device 110 and the degree of coincidence between the displacement of the terminal device 140 and the displacement of the wireless relay device 110 becomes lower than the predetermined value, the control unit 200 may perform the processing for switching the connection destination of the terminal device 140 to the wireless communication device other than the wireless relay device 110.

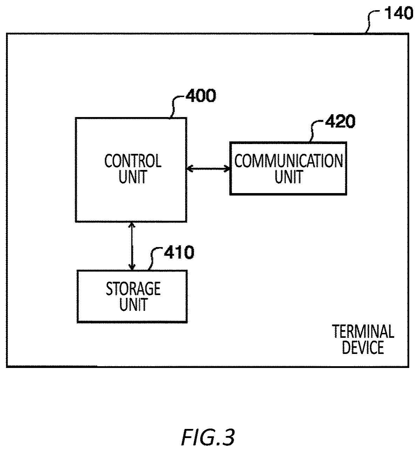

Fig. 3 illustrates an example of a system configuration of the terminal device 140. The terminal device 140 performs communication with the wireless relay device 110 via the wireless relay device 110. The terminal device 140 includes a control unit 400, a storage unit 410, and a communication unit 420.

The control unit 400 performs control of the entire terminal device 140. The communication unit 420 is responsible for wireless communication between the wireless relay device 110 and the terminal device 140. The control unit 400 is realized by a computing device including a processor. The storage unit 410 is realized including a non-volatile storage medium. The control unit 400 performs processing by using information stored in the storage unit 410. The control unit 400 may be realized by a microcomputer including a CPU, a ROM, a RAM, an I/O, a bus, and the like. The terminal device 140 may be realized by a computer. The terminal device 140 may be realized by a single computer. The terminal device 140 may be realized by a plurality of computers. A function of the terminal device 140 may be realized by a virtual system that is realized by using a virtualization technique.

The communication unit 420 receives broadcast data which is broadcasted from the wireless relay device 110. In the present embodiment, the broadcast data is the data broadcasted as the reporting information. The broadcast data may be data transmitted on the control plane. The control unit 400 acquires location information of the wireless relay device 110 from the broadcast data and performs the processing for switching the connection destination of the terminal device 140 based on a comparison result between the location information acquired from the broadcast data and the location information of the terminal device 140.

When the terminal device 140 is not connected to the wireless relay device 110 and a degree of coincidence between the location information acquired from the broadcast data and the location information of the terminal device 140 becomes higher than a predetermined value, the control unit 400 performs the processing for switching the connection destination of the terminal device 140 to the wireless relay device 110. The processing for switching the connection destination of the terminal device 140 may include processing to transmit a peripheral base station measurement result.

When the terminal device 140 is connected to the wireless relay device 110 and the degree of coincidence between the location information acquired from the broadcast data and the location information of the terminal device 140 becomes lower than the predetermined value, the control unit 400 performs the processing for switching the connection destination of the terminal device 140 to the wireless communication device other than the wireless relay device 110.

The control unit 400 may acquire the displacement of the wireless relay device 110 from the plurality of pieces of broadcast data received at different timings by the communication unit 420 and cause the processing for switching the connection destination of the terminal device 140 to be performed based on a comparison result between the displacement of the wireless relay device 110 and the displacement of the terminal device 140.

When the terminal device 140 is not connected to the wireless relay device 110 and the degree of coincidence between the displacement of the wireless relay device 110 and the displacement of the terminal device 140 becomes higher than a predetermined value, the control unit 400 may perform the processing for switching the connection destination of the terminal device 140 to the wireless relay device 110.

When the terminal device 140 is connected to the wireless relay device 110 and the degree of coincidence between the displacement of the wireless relay device 110 and the displacement of the terminal device 140 becomes lower than the predetermined value, the control unit 400 may perform the processing for switching the connection destination of the terminal device 140 to the wireless communication device other than the wireless relay device 110.

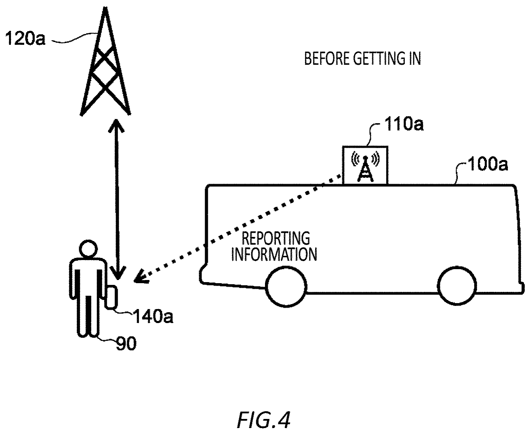

Fig. 4 illustrates a case where the terminal device 140a exists outside the movable body 100a and the terminal device 140a is connected to the wireless base station 120a. Here, a case will be considered where the movable body 100 is a bus to describe the connection destination of the terminal device 140 when a user 90 possessing the terminal device 140a uses the bus.

When the movable body 100a moves to a proximity of the terminal device 140a, the terminal device 140a receives reporting information of the wireless relay device 110a. The reporting information includes information representing a current location of the wireless relay device 110a. The wireless relay device 110a has a function to calculate a current location of the wireless relay device 110a based on a positioning signal transmitted from, for example, a global navigation satellite system (GNSS) satellite. The wireless relay device 110a transmits the reporting information by including therein the current location of the wireless relay device 110a calculated from the positioning signal.

Similarly as in the wireless relay device 110a, the terminal device 140a has a function to calculate a current location of the terminal device 140a based on the positioning signal transmitted from, for example, the global navigation satellite system (GNSS) satellite. When a peripheral base station measurement control instruction is received from the wireless base station 120a, the terminal device 140a suppresses transmission of a peripheral base station measurement result in a case where it is determined that a distance between the current location of the wireless relay device 110a which is included in the reporting information received from the wireless relay device 110a and the current location of the terminal device 140a is a predetermined distance or more. With this configuration, it is possible to suppress switching of the connection destination of the terminal device 140a to the wireless relay device 110a even when the user 90 is not aboard the movable body 100a. With this configuration, it becomes easier to maintain a state in which the terminal device 140a is connected to the wireless base station 120a.

Note that the reporting information transmitted from the wireless relay device 110a may include information indicating that the wireless relay device 110a is a mobile wireless relay device. When the information indicating the wireless relay device 110a is a mobile wireless relay device is not included, the terminal device 140a does not necessarily need to transmit the transmission of the peripheral base station measurement result. The reporting information transmitted from the wireless relay device 110a may include a condition which a quality of a reception signal is to meet to connect to the wireless relay device 110a. Under a condition that at least the quality of the signal received from the wireless relay device 110a meets the above-described condition, the terminal device 140a does not necessarily need to transmit the peripheral base station measurement result. As the condition to be included in the reporting information which the quality of the reception signal is to meet, the wireless relay device 110a may set a quality condition lower than a predetermined value. For example, the wireless relay device 110a may set a value lower than the predetermined value as a lower limit value of the quality of the reception signal to be included in the reporting information. With this configuration, it can be easier to connect the terminal device 140a to the wireless relay device 110a.

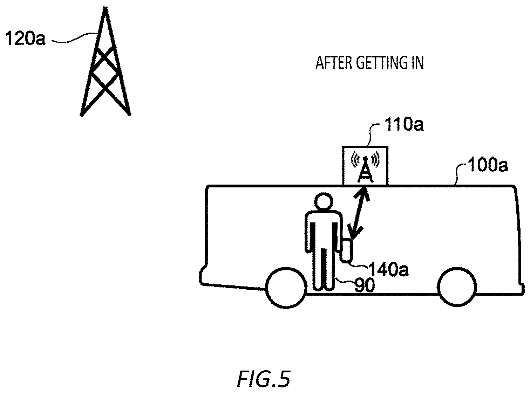

Fig. 5 illustrates a case where the user 90 gets in the movable body 100a. When it is determined that the distance between the current location of the wireless relay device 110a which is included in the reporting information received from the wireless relay device 110a and the current location of the terminal device 140a becomes shorter than the predetermined distance, the terminal device 140a may facilitate the transmission of the peripheral base station measurement result. With this configuration, when the user 90 possessing the terminal device 140a gets in the movable body 100a, according to a reception situation of a radio wave from the wireless relay device 110a, the connection destination of the terminal device 140a is more likely to be switched to the wireless relay device 110a.

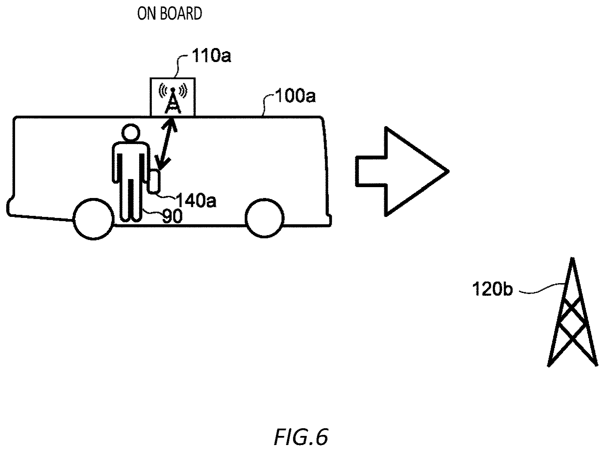

Fig. 6 illustrates a case where the movable body 100 travels in a state in which the user 90 is aboard the movable body 100a. The terminal device 140a calculates a displacement of the wireless relay device 110a from the current location at each timing of the wireless relay device 110a which is included in each of pieces of reporting information received at mutually different timings. The terminal device 140a also calculates a displacement of the terminal device 140a from the current location at each timing of the wireless relay device 110a which is obtained through positioning at mutually different timings.

The displacement of the wireless relay device 110a may be a movement speed of the wireless relay device 110a, and the displacement of the terminal device 140a may be a movement speed of the terminal device 140a. The displacement of the wireless relay device 110a may be a movement direction of the wireless relay device 110a, and the displacement of the terminal device 140a may be a movement direction of the terminal device 140a.

When a degree of coincidence between the displacement of the wireless relay device 110a and the displacement of the terminal device 140a which have been calculated is higher than a predetermined value, the terminal device 140a may suppress the transmission of the peripheral base station measurement result. With this configuration, when a reception intensity of a radio wave from the wireless base station 120b becomes relatively higher while the user 90 is aboard the movable body 100a, it is possible to suppress the switching of the connection destination of the terminal device 140a from the wireless relay device 110a to the wireless base station 120b. With this configuration, it becomes easier to maintain a state in which the terminal device 140a is connected to the wireless relay device 110a.

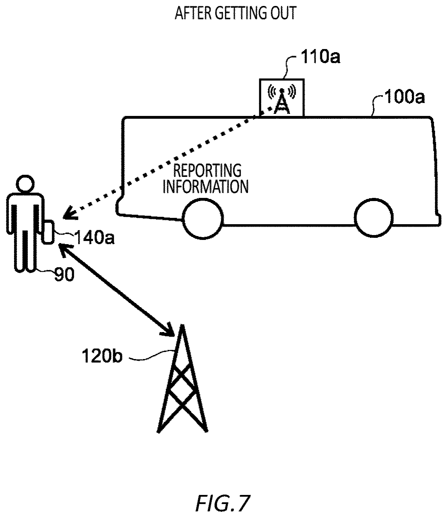

Fig. 7 illustrates a case where the user 90 gets out of the movable body 100a. When it is determined that the distance between the current location of the wireless relay device 110a which is included in the reporting information received from the wireless relay device 110a and the current location of the terminal device 140a becomes the predetermined distance or more, the terminal device 140a may facilitate the transmission of the peripheral base station measurement result. With this configuration, the connection destination of the terminal device 140a is more likely to be switched to the wireless base station 120b. In this manner, it is possible to suppress continuation of a state in which the terminal device 140a is connected to the wireless relay device 110a despite that the user 90 is not aboard the movable body 100a.

By the way, when the movable body 100a starts travelling after the user 90 gets out of the movable body 100a, the terminal device 140a calculates the displacement of the wireless relay device 110a from the current location at each timing of the wireless relay device 110a which is included in each of the pieces of the reporting information received at mutually different timings and also calculates the displacement of the terminal device 140a from the current location at each timing of the wireless relay device 110a obtained through positioning at mutually different timings. When the degree of coincidence between the displacement of the wireless relay device 110a and the displacement of the terminal device 140a which have been calculated becomes equal to or less than the predetermined value, the terminal device 140a facilitates the transmission of the peripheral base station measurement result. With this configuration, even when the connection state between the terminal device 140a and the wireless relay device 110a is maintained after the user 90 gets out of the movable body 100a, in response to the displacement of the wireless relay device 110a no longer matching the displacement of the terminal device 140a, the connection destination of the terminal device 140a can be more likely to be switched to the nearby wireless base station 120b.

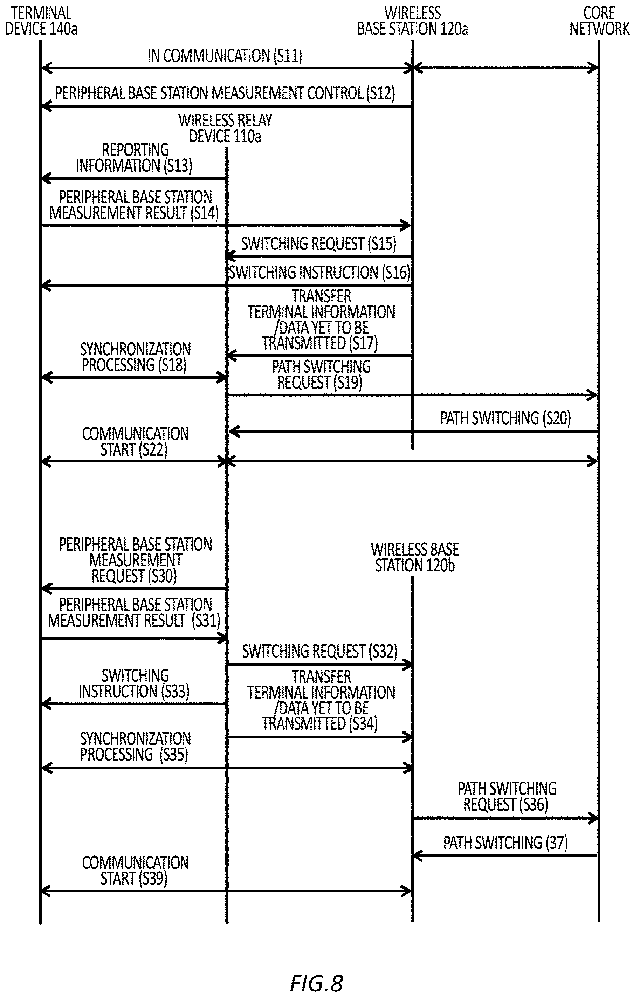

Fig. 8 illustrates an example of a sequence according to a wireless communication method performed in the wireless communication system 5. Along the sequence of Fig. 8, main processing to be performed from the connection state of Fig. 4 to the connection state of Fig. 7 will be described.

At the time of start of the present sequence, it is assumed that the terminal device 140a is in a state of being connected to the wireless base station 120a as illustrated in Fig. 4, for example. That is, the terminal device 140a is connected to the wireless base station 120a to be in communication (S11), and the terminal device 140a is connected to a core network through the wireless base station 120a.

The movable body 100a approaches a location of the terminal device 140a, and the peripheral base station measurement control instruction is transmitted from the wireless base station 120a (S12). The terminal device 140a can receive the reporting information periodically transmitted from the wireless relay device 110a provided in the movable body 100a (S13). When the user 90 gets in the movable body 100a, in a case where a distance between the current location of the wireless relay device 110a which is included in the received reporting information and the current location of the terminal device 140a becomes shorter than a predetermined distance, the control unit 400 of the terminal device 140a determines that the terminal device 140a is in the movable body 100a. In this case, the control unit 400 of the terminal device 140a measures a reception state of the radio wave from the wireless relay device 110a and transmits a measurement result of the reception state of the radio wave to the wireless relay device 110a (S14).

When the wireless base station 120a determines that the connection destination of the terminal device 140a can be switched from the wireless base station 120a to the wireless relay device 110a based on the measurement result received from the terminal device 140a, the wireless base station 120a transmits a switching request to the wireless relay device 110a (S15) and also transmits a switching instruction indicating that the connection destination is to be switched to the terminal device 140a (S16). Furthermore, the wireless base station 120a transfers, to the wireless relay device 110a, identification information of the terminal device 140a that is a switching target of a communication connection destination and also data that is yet to be transmitted (S17).

The wireless base station 120a performs line synchronization processing with the terminal device 140a (S18), and also transmits a path switching request to the core network (S19). Path switching from the wireless base station 120a to the wireless relay device 110a is performed by the core network (S20). With this configuration, as illustrated in Fig. 5, the terminal device 140a is connected to the wireless relay device 110b, and the terminal device 140a can communicate with the wireless base station 120a and the core network through the wireless relay device 110a (S22).

While the movable body 100a moves together with the user 90, a state continues in which a distance between the current location of the terminal device 140a and the current location of the wireless relay device 110a is shorter than a predetermined distance and a degree of coincidence between the displacement of the terminal device 140a and the displacement of the wireless relay device 110a is higher than a predetermined value. In this case, the control unit 400 of the terminal device 140a determines that the switching of the connection destination of the terminal device 140a is suppressed and suppresses the transmission of the peripheral base station measurement result.

For example, when the difference between the current location of the terminal device 140a and the current location of the wireless relay device 110a is shorter than the predetermined distance and the degree of coincidence between the displacement of the terminal device 140a and the displacement of the wireless relay device 110a is higher than a predetermined value, as compared to a case where the distance between the current location of the terminal device 140a and the current location of the wireless relay device 110a is the predetermined distance or more or the degree of coincidence between the displacement of the terminal device 140a and the displacement of the wireless relay device 110a is a predetermined value or less, the control unit 400 of the terminal device 140a sets a determination standard to be stricter for determining that a peripheral base station is to be measured and a measurement result thereof is to be transmitted. For example, the control unit 400 of the terminal device 140a increases a threshold of a radio wave intensity serving as the determination standard for determining that the peripheral base station is to be measured and the measurement result thereof is to be transmitted. With this configuration, it becomes easier to maintain the connection between the terminal device 140a and the wireless relay device 110a.

Subsequently, a case will be described where the movable body 100a stops in the cell 180b of the wireless base station 120b and the user 90 gets out of the movable body 100a. In S30, a peripheral base station measurement instruction is transmitted from the wireless relay device 110a to the terminal device 140a. When the distance between the current location of the wireless relay device 110a which is included in the reporting information received from the wireless base station 120a and the current location of the terminal device 140a becomes the predetermined distance or more, the control unit 400 of the terminal device 140a determines that the terminal device 140a is out of the movable body 100a. In this case, the control unit 400 of the terminal device 140a measures the reception state of the radio wave from the wireless relay device 110a and transmits a measurement result of the reception state of the radio wave to the wireless relay device 110a (S31).

When the control unit 200 of the wireless relay device 110a determines that the connection destination of the terminal device 140a is to be switched to the wireless base station 120b based on the measurement result, the communication unit 220 of the wireless relay device 110a transmits the switching request to the wireless base station 120b (S32), and also transmits the switching instruction indicating that the connection destination is to be switched to the terminal device 140a (S33). Furthermore, the communication unit 220 of the wireless relay device 110a transfers, to the wireless base station 120b, identification information of the terminal device 140a serving as the switching target of the connection destination and also data that is yet to be transmitted (S34).

The wireless base station 120b performs the line synchronization processing with the terminal device 140a (S35), and also transmits the path switching request to the core network (S36). The path switching from the wireless relay device 110a to the wireless base station 120b is performed by the core network (S37). With this configuration, the connection destination of the terminal device 140a is switched from the wireless relay device 110a to the wireless base station 120a, and communication between the terminal device 140a and the wireless base station 120a is started (S39).

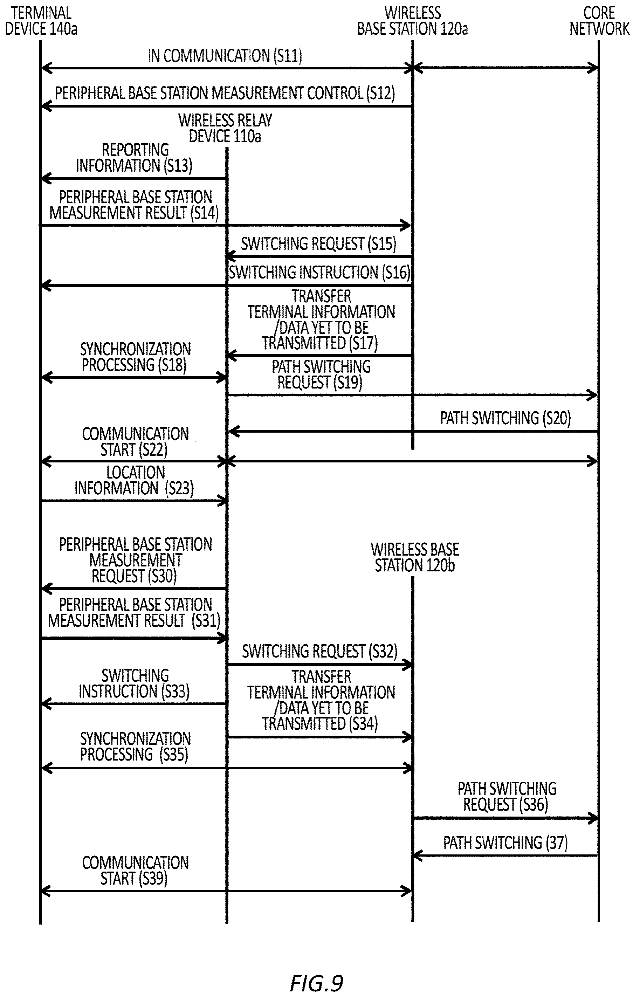

Fig. 9 illustrates an example of the sequence according to the wireless communication method performed by the wireless communication system 5. The sequence illustrated in Fig. 9 is different from the sequence illustrated in Fig. 8 in that step S33 for the terminal device 140a to transmit current location information of the terminal device 140a to the wireless relay device 110 is included, and processing to determine on the switching of the connection destination of the terminal device 140a is performed by the terminal device 140a based on the current locations of the terminal device 140a and the wireless relay device 110. Therefore, the difference from the sequence of Fig. 8 will be mainly described.

While the terminal device 140a is connected to the wireless relay device 110a, the communication unit 420 of the terminal device 140a periodically transmits location information of the terminal device 140a to the wireless relay device 110a (S23). While the movable body 100a moves together with the user 90, a state continues in which the distance between the current location of the terminal device 140a and the current location of the wireless relay device 110a is shorter than the predetermined distance, and the degree of coincidence between the displacement of the terminal device 140a and the displacement of the wireless relay device 110a is higher than the predetermined value. In this case, the control unit 200 of the wireless relay device 110a determines that the switching of the connection destination of the terminal device 140a is to be suppressed and suppresses the switching of the connection destination of the terminal device 140a.

For example, when the difference between the current location of the terminal device 140a and the current location of the wireless relay device 110a is shorter than the predetermined distance and the degree of coincidence between the displacement of the terminal device 140a and the displacement of the wireless relay device 110a is higher than the predetermined value, as compared to a case where the distance between the current location of the terminal device 140a and the current location of the wireless relay device 110a is the predetermined distance or more or the degree of coincidence between the displacement of the terminal device 140a and the displacement of the wireless relay device 110a is the predetermined value or less, the control unit 200 of the wireless relay device 110a sets the determination standard to be stricter for determining that the switching of the connection destination of the terminal device 140a is to be performed based on the peripheral base station measurement result. For example, the control unit 200 of the wireless base station 120a increases a threshold of a radio wave intensity at a connection destination which serves as the determination standard for determining that the connection destination is to be switched. With this configuration, it becomes easier to maintain the connection between the terminal device 140a and the wireless relay device 110a.

Next, a case will be described where the movable body 100a stops in the cell 180b of the wireless base station 120b, and the user 90 gets out of the movable body 100a. When a distance between the current location of the terminal device 140a which is received from the terminal device 140a and the current location of the wireless relay device 110 becomes a predetermined distance or more, the control unit 200 of the wireless relay device 110 determines that the terminal device 140a is out of the movable body 100a. In this case, the control unit 200 of the wireless relay device 110a facilitates the switching of the connection destination of the terminal device 140a. For example, the control unit 200 of the wireless relay device 110a decreases the threshold of the radio wave intensity at the connection destination serving as the determination standard for determining that the connection destination is to be switched. With this configuration, for example, the switching request from the wireless base station 120a to the wireless base station 120b is more likely to be transmitted, and early switching of the connection destination of the terminal device 140a can be facilitated.

In the example in Fig. 9, a case has been described where when the terminal device 140a is connected to the wireless relay device 110a, the switching of the connection destination of the terminal device 140a is determined based on the location information of the terminal device 140a and the wireless relay device 110a. However, when the terminal device 140a is connected to the wireless base station 120a, the wireless relay device 110a may determine the switching of the connection destination of the terminal device 140a based on the location information of the terminal device 140a and the wireless relay device 110a. For example, when the switching request is received in S15 in Fig. 9, it may be determined whether or not the switching request is to be accepted based on the location information of the terminal device 140a and the wireless relay device 110a. For example, when the difference between the current location of the terminal device 140a and the current location of the wireless relay device 110a is shorter than the predetermined distance and/or the degree of coincidence between the displacement of the terminal device 140a and the displacement of the wireless relay device 110a is higher than the predetermined value, the control unit 200 of the wireless relay device 110a may determine that the switching request from the wireless base station 120a is to be accepted. On the other hand, when the difference between the current location of the terminal device 140a and the current location of the wireless relay device 110a is the predetermined distance or more and/or the degree of coincidence between the displacement of the terminal device 140a and the displacement of the wireless relay device 110a is the predetermined value or less, the control unit 200 of the wireless relay device 110a may determine that the switching request from the wireless base station 120a is not to be accepted.

As another modified example, a mode may be adopted in which the processing to determine the switching of the connection destination of the terminal device 140a based on the location information of the terminal device 140a and the wireless relay device 110a is performed by the wireless base station 120a. The wireless base station 120a periodically receives the current location of the wireless relay device 110a from the terminal device 140a and also periodically receives the current location of the terminal device 140a from the terminal device 140a or through the wireless base station 120a. In a case where the terminal device 140a is connected to the wireless base station 120a similarly as in the processing of the wireless relay device 110 described in relation to Fig. 9, for example, the wireless base station 120a may determine whether or not the connection destination of the terminal device 140a is to be switched to the wireless relay device 110a based on the location information of the terminal device 140a and the wireless relay device 110a, and when it is determined that the connection destination of the terminal device 140a is to be switched, the switching request may be transmitted to the wireless relay device 110a. Furthermore, when the terminal device 140a is connected to the wireless relay device 110a, the wireless base station 120a may determine whether or not the connection destination of the terminal device 140a is to be switched based on the location information of the terminal device 140a and the wireless relay device 110a, and an instruction may be transmitted to the wireless base station 120a indicating that the switching of the terminal device 140a is to be performed to the wireless relay device 110a.

According to the wireless communication system 5 described above, when it is determined that the terminal device 140 exists in the movable body 100 based on the location information of the terminal device 140 and the location information of the wireless relay device 110, the terminal device 140 can be prompted to be connected to the wireless relay device 110. Furthermore, when it is determined that the terminal device 140 exists outside the movable body 100 based on the location information of the terminal device 140 and the location information of the wireless relay device 110, the terminal device 140 can be prompted to be connected to the wireless communication device other than the wireless relay device 110. With this configuration, stability of the communication by the wireless relay device 110 can be improved, and consequently, the traffic safety in the movable body 100 can be increased.

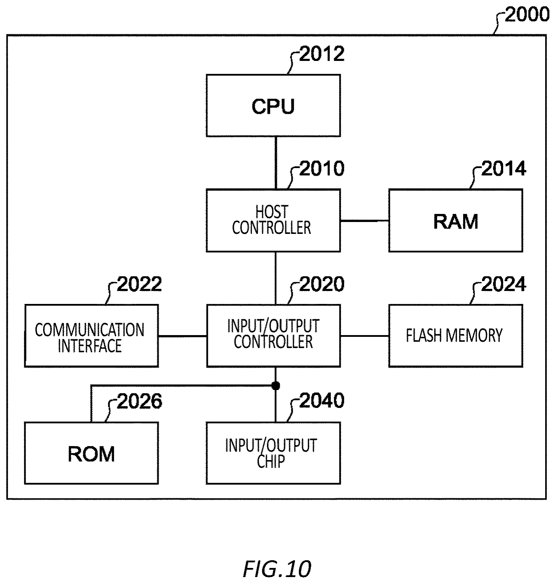

Fig. 10 illustrates an example of a computer 2000 in which a plurality of embodiments of the present invention may be entirely or partially embodied. Programs installed in the computer 2000 can cause the computer 2000 to function as the system according to the embodiment or each unit of the system or various devices such as the wireless base station, the wireless relay device, and the terminal device or each unit of the device, to perform operations associated with the system or each unit of the system or the device or each unit of the device, and/or to perform a process according to the embodiment or a step of the process. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer readable storage medium such as a CD-ROM, a DVD-ROM, or a memory card. The RAM 2014, the ROM 2026, or the flash memory 2024 is an example of the computer readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software modules explained above may be stored in the computer readable storage medium on the computer 2000 or in the vicinity of the computer 2000. A recording medium such as a hard disk or a RAM provided in a server system connected to a dedicated communication network or the Internet can be used as the computer readable storage medium. A program stored in the computer readable storage medium may be provided to the computer 2000 via a network.

Programs which are installed in the computer 2000 and cause the computer 2000 to function as the wireless relay device 110 may cause the computer 2000 to respectively function as each unit of the wireless relay device 110 by working with the CPU 2012 or the like. When information processing described in these programs are read by the computer 2000, the computer 2000 functions as each unit of the wireless relay device 110 that is specific means in which software and various hardware resources described above cooperate with each other. With these specific means, the specific wireless relay device 110 appropriate for an intended use can be configured by realizing the calculations or computations of the information appropriate for the intended use of the computer 2000 of the present embodiment.

Programs which are installed in the computer 2000 and cause the computer 2000 to function as the wireless base station 120 may cause the computer 2000 to respectively function as each unit of the wireless base station 120 by working with the CPU 2012 or the like. When information processing described in these programs are read by the computer 2000, the computer 2000 functions as each unit of the wireless base station 120 that is specific means in which software and various hardware resources described above cooperate with each other. With these specific means, the specific wireless base station 120 suitable for an intended use can be configured by realizing the calculations or computations of the information appropriate for the intended use of the computer 2000 of the present embodiment.

Programs which are installed in the computer 2000 and cause the computer 2000 to function as the terminal device 140 may cause the computer 2000 to respectively function as each unit of the terminal device 140 by working with the CPU 2012 or the like. When information processing described in these programs are read by the computer 2000, the computer 2000 functions as each unit of the terminal device 140 that is specific means in which software and various hardware resources described above cooperate with each other. With these specific means, the specific terminal device 140 suitable for an intended use can be configured by realizing the calculations or computations of the information appropriate for the intended use of the computer 2000 of the present embodiment.

Various embodiments have been described with reference to the block diagrams and the like. In the block diagrams, each block may represent (1) a stage of a process in which an operation is executed, or (2) each unit of the apparatus having a role in executing the operation. A specific step and each unit may be implemented by a dedicated circuit, a programmable circuit supplied with computer readable instructions stored on a computer readable storage medium, and/or a processor supplied with computer readable instructions stored on a computer readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer readable storage medium may include any tangible device capable of storing instructions to be executed by an appropriate device. Thereby, the computer readable storage medium having instructions stored therein forms at least a part of a product including instructions which can be executed to provide means for executing processing procedures or operations specified in the block diagrams. An example of the computer readable storage medium may include an electronic storage medium, a magnetic storage medium, an optical storage medium, an electromagnetic storage medium, a semiconductor storage medium, etc. A more specific example of the computer readable storage medium may include a FLOPPY (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a BLU-RAY (registered trademark) disc, a memory stick, or an integrated circuit card.

The computer readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as SMALLTALK (registered trademark), JAVA (registered trademark), and C++, or the like, and a conventional procedural programming language such as a "C" programming language or a similar programming language.

Computer readable instructions may be provided to a processor of a general purpose computer, a special purpose computer, or another programmable data processing apparatus, or to programmable circuit, locally or via a local area network (LAN), wide area network (WAN) such as the Internet or the like, and a computer readable instruction may be executed to provide means for executing operations specified in the described processing procedures or block diagrams. Examples of the processor include a computer processor, a processing unit, a microprocessor, a digital signal processor, a controller, a microcontroller, and the like.

While the present invention has been described by way of the embodiments above, the technical scope of the present invention is not limited to the scope described in the above-described embodiments. It is apparent to persons skilled in the art that various alterations or improvements can be made to the above-described embodiments. It is also apparent from the described scope of the claims that the embodiments added with such alterations or improvements can be included the technical scope of the present invention.

The operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" for convenience in the claims, embodiments, or diagrams, it does not necessarily mean that the process must be performed in this order.

### EXPLANATION OF REFERENCES

5: wireless communication system;
90: user;
100: movable body;
110: wireless relay device;
120: wireless base station;
140: terminal device;
180: cell;
200: control unit;
210: storage unit;
220: communication unit;
400: control unit;
410: storage unit;
420: communication unit;
2000: computer;
2010: host controller;
2012: CPU;
2014: RAM;
2020: input/output controller;
2022: communication interface;
2024: flash memory;
2026: ROM; and
2040: input/output chip.

## Claims

1. A terminal device comprising:
a communication unit which receives broadcast data broadcasted from a wireless relay device; and
a control unit which acquires location information of the wireless relay device from the broadcast data and performs processing for switching a connection destination of the terminal device based on a comparison result between the location information acquired from the broadcast data and location information of the terminal device.

2. The terminal device according to claim 1, wherein
when the terminal device is not connected to the wireless relay device and a degree of coincidence between the location information acquired from the broadcast data and the location information of the terminal device becomes higher than a predetermined value, the control unit performs processing for switching the connection destination of the terminal device to the wireless relay device.

3. The terminal device according to claim 1 or 2, wherein
when the terminal device is connected to the wireless relay device and a degree of coincidence between the location information acquired from the broadcast data and the location information of the terminal device becomes lower than a predetermined value, the control unit performs processing for switching the connection destination of the terminal device to a wireless communication device other than the wireless relay device.

4. The terminal device according to claim 1, wherein
the control unit
acquires a displacement of the wireless relay device from a plurality of pieces of broadcast data received at different timings by the communication unit, and
causes the processing for switching the connection destination of the terminal device to be performed based on a comparison result between the displacement of the wireless relay device and a displacement of the terminal device.

5. The terminal device according to claim 4, wherein
when the terminal device is not connected to the wireless relay device and a degree of coincidence between the displacement of the wireless relay device and the displacement of the terminal device becomes higher than a predetermined value, the control unit performs processing for switching the connection destination of the terminal device to the wireless relay device.

6. The terminal device according to claim 4 or 5, wherein
when the terminal device is connected to the wireless relay device and a degree of coincidence between the displacement of the wireless relay device and the displacement of the terminal device becomes lower than a predetermined value, the control unit performs processing for switching the connection destination of the terminal device to a wireless communication device other than the wireless relay device.

7. The terminal device according to any one of claims 1, 2, 4, and 5, wherein
the processing for switching the connection destination of the terminal device includes processing to transmit a peripheral base station measurement result.

8. The terminal device according to any one of claims 1, 2, 4, and 5, wherein
the broadcast data is data broadcasted as reporting information.

9. A program for causing a computer to function as the terminal device according to any one of claims 1, 2, 4, and 5.

10. A wireless relay device that relays communication between a terminal device and a wireless base station, the wireless relay device comprising:
a communication unit which broadcasts broadcast data including information representing a current location of the terminal device and receives terminal location information representing the current location of the terminal device; and
a control unit which performs processing for switching a connection destination of the terminal device based on a comparison result between the current location of the terminal device which is represented by the terminal location information and a current location of the wireless relay device.

11. The wireless relay device according to claim 10, wherein
when the terminal device is connected to the wireless relay device and a degree of coincidence between the current location of the terminal device which is represented by the terminal location information and the current location of the wireless relay device becomes lower than a predetermined value, the control unit performs processing for switching the connection destination of the terminal device to a wireless communication device other than the wireless relay device.

12. The wireless relay device according to claim 10, wherein
the control unit
acquires a displacement of the terminal device from the terminal location information received at different timings by the communication unit, and
causes the processing for switching the connection destination of the terminal device to be performed based on a comparison result between the displacement of the terminal device and a displacement of the wireless relay device.

13. The wireless relay device according to claim 12, wherein
when the terminal device is connected to the wireless relay device and a degree of coincidence between the displacement of the terminal device and the displacement of the wireless relay device becomes lower than a predetermined value, the control unit performs processing for switching the connection destination of the terminal device to a wireless communication device other than the wireless relay device.

14. The wireless relay device according to any one of claims 10 to 13, wherein
the broadcast data is data broadcasted as reporting information.

15. A movable body comprising the wireless relay device according to any one of claims 10 to 13.

16. A program for causing a computer to function as the wireless relay device according to any one of claims 10 to 13.

17. A wireless communication method comprising:
receiving broadcast data transmitted from a wireless relay device; and
acquiring location information of the wireless relay device from the broadcast data and performing processing for switching a connection destination of a terminal device based on a comparison result between the location information acquired from the broadcast data and location information of the terminal device.

18. A wireless communication method performed in a wireless relay device that relays communication between a terminal device and a wireless base station, the wireless communication method comprising:
broadcasting broadcast data including information representing a current location of the terminal device and receiving terminal location information representing the current location of the terminal device; and
performing processing for switching a connection destination of the terminal device based on a comparison result between the current location of the terminal device which is represented by the terminal location information and a current location of the wireless relay device.
